# EUROPEAN PATENT APPLICATION

(11) **EP 2 458 237 A1**
(43) Date of publication of application: **30.05.2012**
(21) Application number: 11747046.8
(22) Date of filing: 23.02.2011
(51) Int. Cl.: F16C 33/66, F16C 19/36, F16C 33/36, F16C 33/64

(54) **ROLLER BEARING AND PROCESS FOR PRODUCING SAME**

(30) Priority: 22.02.2011 JP 2011035531; 23.02.2010 JP 2010037474
(71) Applicant: NSK Ltd., Tokyo 141-8560 (JP)
(72) Inventor: SAITO, Tomoharu, Fujisawa-shi Kanagawa 251-8501 (JP); KOBAYASHI, Masato, Fujisawa-shi Kanagawa 251-8501 (JP); TANOUE, Yasushi, Fujisawa-shi Kanagawa 251-8501 (JP); IWAO, Takuya, Fujisawa-shi Kanagawa 251-8501 (JP); FUJITA, Shinji, Fujisawa-shi Kanagawa 251-8501 (JP)
(74) Representative: Klingseisen, Franz
(86) International application number: PCT/JP2011/001038
(87) International publication number: WO 2011/105077

(57) **Abstract**

Spherical particles having diameters of 100 µm or less are projected on a surface of a tapered roller (3) so as to form recesses and protrusions, and abrasive particles are then projected thereon so as to remove the protrusions. The abrasive particles result from adhering 5 mass% diamond grains with an average diameter of 10 µm on surfaces of 1 mm-diameter rubber particles. As a result, multiple recesses having circular openings of 50 µm or less are formed on the surface of the tapered roller (3) at intervals of 200 µm or less. These recesses become moderate oil pools, heightening the oil film formation capability of the roller surface, and thus torque of the tapered roller bearing may be decreased.

## Description

### Technical Field

The present invention relates to a roller bearing, such as a tapered roller bearing, for supporting a rotating shaft of an automobile drive system (differential, transmission, and transfer), and a method for manufacturing the same,

### Background Art

The tapered roller bearing used in the automobile differential requires lowered torque particularly in low-velocity areas. Formation of an oil film on the entire roller surface is effective in order to reduce the torque of the tapered roller bearing.
Formation of an oil film, which covers a surface of either an end of a roller or a rib including a guide face for it and is disposed therebetween, is disclosed in Patent Documents 1 to 3. In Patent Document 1, minute recesses are formed on the roller guide face of the rib through shot blasting. Patent Document 2 discloses making a smooth surface into a finished surface in which troughs are randomly formed through machining using a grindstone attached with grains of different sizes.

Patent Document 3 discloses making a predetermined smooth surface have interspersed troughs of a predetermined depth with a stipulated surface roughness. A method of repeating, after every short period, bringing a disc-like grindstone into contact with a surface to be polished and then retreating therefrom is disclosed.
Patent Documents 4 to 6 disclose random provision of multiple minute recesses in any one of a rolling surface of the roller, an end of the roller, and a bearing ring raceway surface, and stipulation of the surface roughness thereof within a specific range so as to achieve excellent oil film formative action. They also disclose that these recesses may be machined through barreling or a method using shot blasting or the like.

Patent Document 7 discloses projection of approximately spherical particles made of 99% or greater purity silica onto a sliding surface of an aluminum alloy slide member so as to form a transcriptional layer in which the silica has been transcribed onto the sliding surfaces. In this method, the roughness of the sliding surface is finished to approximately Ra 0.3 µm through grinding before projecting the silica particles.

Patent Document 8 discloses projection of abrasive particles including #2000 or larger grains made froman elastic material, such as rubber, or thermoplastic elastomer, onto an object to be polished at an angle of 90 degrees or less as a method of finished polishing a surface of the object.. As a result, the remaining grains sticking out from the object are removed through grinding, and the grinding grains and strips are also sufficiently removed at the same time, thereby achieving a clean surface with a good roughness. Finished grinding of a rolling surface of the roller by this method allows improvement in burn-on lifetime of the roller bearing and the like.

On the other hand, Patent Document 9 discloses a structure illustrated in FIG. 4 as an automobile transfer according to conventional technology. This transfer has a bevel pinion shaft 5, a ring gear 6, and a differential 7 disposed in a casing (gear box) 100. The bevel pinion shaft 5 is supported by the casing 100 via two tapered roller bearings 10A at a distance therebetween. These tapered roller bearings 10A are applied with a pre-load in an axial direction from a screw thread-attached member 110.

The differential 7 is configured by a differential casing 71, pinion gears (differential gears) 73 fixed on either end of a pinion shaft 72, and side gears (output gears) 74 for engaging with the respective pinion gears 73. Front edges of axel shafts 8 are coupled with the respective side gears 74
A bevel pinion gear 51 on the front edge of the bevel pinion shaft 5 engages with the ring gear 6" The ring gear 6 is fixed to a flange 71a of the differential casing 71. Cylinders 71b on both ends of the differential casings 71 are supported by the casing 100 via tapered roller bearings 10B, Rotation of the bevel pinion shaft 5 drives the differential 7 via the bevel pinion gear 51 and the ring gear 6.

The transfer has a problem that friction occurs between ends of the tapered rollers and the inner ring rim, which constitute the tapered roller bearings 10A, thereby generating sliding friction. In order to resolve this problem. Patent Document 9 discloses that the bevel pinion shaft 5 is supported by double row angular ball bearings having a specific shape instead of the tapered roller bearings 10A.

### Prior Art Documents

### Patent Documents

- Patent Document 1:: JP Hei 6-241235 A
- Patent Document 2:: JP Hei 7-42746 A
- Patent Document 3:: JP 2003-269468 A
- Patent Document 4:: JP 2006-9962 A
- Patent Document 5:: JP 2006-9963 A
- Patent Document 6:: JP 2006-9964 A
- Patent Document 7:: JP 2009-526126 A
- Patent Document 8:: JP 2009-113189 A
- Patent Document 9:: JP 4058241 B

### Summary of the Invention

### Problem To Be Solved By the Invention

The methods of Patent Documents 1 to 8 have room for improvement in torque reduction of the tapered roller bearing for supporting the rotating shaft of the automobile drive system (differential, transmission, and transfer) Note that the automobile transfer of Patent Document 9 deals with the above through use of double row angular ball bearings having a specific shape instead of the tapered roller bearings.
An objective of the present invention is to reduce torque of a roller bearing such as a tapered roller bearing for supporting a rotating shaft of an automobile drive system. Solution to the Problem

In order to resolve the above problem, a roller bearing according to a first aspect of the present invention includes an inner ring having an inner ring raceway surface, an outer ring having an outer ring raceway surface, and a roller deployed in a freely rolling manner between the raceway surfaces. A number of recesses having circular openings with diameters of 10 µm to 50 µm inclusive are formed at intervals of 10 µm to 200 µm inclusive on at least a target surface which is at least any one of the inner ring raceway surface, the outer ring raceway surface, a roller surface of the roller, an end of the roller, and a rib surface in contact, with the end of the roller.

It is preferable for the target surface to have arithmetic average height (Ra) of a roughness curve indicating surface roughness of 0.1 to 0,2 µm, skewness (Rsk) of -1.0 to -0.2, and kurtosis (Rku) of 3 to 7,
The roller bearing of the first aspect may have a surface layer at a depth of 10 µm or less from the surface of the target surface that is harder than a core at a depth of more than 10 µm from the surface.
In the roller bearing of the first aspect, the roller may be a tapered roller used for application of supporting a rotating shaft of an automobile differential, transmission, or transfer (tapered roller bearing for an automobile drive system)".

A roller bearing manufacturing method according to a second aspect of the present invention carries out a shot blast step of projecting spherical particles (e.g., silica particles, alumina particles, or steel particles) having a Mohs hardness of 6 or greater and diameters of 10 µm to 100 µm inclusive so as to form recesses and protrusions, as a surface treatment step for a to-be-treated surface including at least any one of an inner ring raceway surface, an outer ring raceway surface, a roller surface of the roller, an end of a roller, and a rib surface in contact with the end of the roller of a roller bearing that includes an inner ring having the inner ring raceway surface, an outer ring having the outer ring raceway surface, and the roller deployed in a freely rolling manner between the raceway surfaces..

Through the shot blast step above, the to-be-treated surface may be made to have a number of recesses, which have circular openings with diameters of 10 µm to 50 µm inclusive, at intervals of 10 µm to 200 µm inclusive, and a state fulfilling arithmetic average height (Ra) of 0.1 to 0.2 µm, skewness (Rsk) of -1.0 to -0.2, and kurtosis (Rku) of 3 to 7.

The shot blast step is preferably carried out using spherical silica microparticles of 99% or greater purity as the spherical particles.
A protrusion removal step for removing protrusions generated in the shot blast step is preferably carried out as the surface treatment step after the shot blast step.
The protrusion removal step may be carried out by bombarding abrasive particles formed of elastic bodies and grains on a to-be-treated surface after the shot blast step..

Since the recesses have circular openings, they act as better oil pools than recesses having linear or elliptic openings. Recesses with linear or elliptic openings have portions with small touch areas, which make it easier to eliminate oil therefrom.. Since moderate oil pools are formed if the diameters of the circular openings of the recesses are 10 µm to 50 µm inclusive, and the set intervals are 10 µm to 200 µm inclusive, the surface in which the recesses are formed has excellent oil film formation capability.

The target surface (surface in which the recesses are formed) is 0.1 to 0.2 µm in arithmetic average height (Ra) of a roughness curve indicating surface roughness, -1.0 to -0.2 in skewness (Rsk), and 3 to 7 in kurtosis (Rku), and thereby has excellent oil film formation capability since it is a more favorable plateau surface having coexisting flat portion and recesses (oil pools) than when the above conditions are not satisfied.
As a result, in the case of using the tapered roller bearing of the first aspect for application of supporting a rotating shaft of an automobile drive system, sliding friction is reduced and torque is low even at the time of driving in low-velocity areas.

It is preferable that the surface in which the recesses are formed has an area rate of openings of the recesses of 5 to 20%, It is also preferable that the surface in which the recesses are formed has recess summated diameters of 5 to 50% along an extended line of a diameter of the openings of the recesses. If the area rate of the recesses exceeds 20%, the surface (smooth surface) excluding the recesses may not be able to support a load and an oil film may not be formed well. If the summated diameter ratio of the recesses exceeds 50%, pressure on the rims of the recesses decreases and the formation of an oil film becomes difficult.

If depth of the recesses is less than 1 µm, there is a high risk that the recesses will be eliminated through initial abrasion, and if the depth exceeds 5 µm, such a depth reduces the capability of moving the oil accumulated in the recesses to the smooth surface and forming an oil film Accordingly, it is preferable that depth of the recesses is no less than 1 µm at the shallowest portion, and no greater than 5 µm at the deepest portion.
The recesses of the above structure may be formed by a method including the shot blast step of forming recesses and protrusions by projecting glass beads on a recess formation surface (to-be-treatedsurface), and a protrusion removal step of removing the protrusions (portions protruding out from the pre-treated surface) formed in the shot blast step.

While the protrusion removal step may be carried out through grinding, it is preferably carried out by bombarding abrasive particles formed of elastic bodies and grains on the to-be-treated surface after the shot blast step.
Adoption of the shot blast step of projecting glass beads and the protrusion removal step of bombarding the abrasive particles allows easy formation of recesses, which have circular openings and controlled size, depth, and intervals, even when the to-be-treated surface is large or form of the to-be-treated surface is complicated.

The shot blast step may be carried out using as the glass beads, spherical silica microparticles of 99% or greater purity having diameters between 10 µm and 100 µm inclusive and a Mohs hardness of 6 or greater.
In the case of an inner ring, an outer ring, and a tapered roller to which a typical heat treatment has been conducted for a material made of high carbon chromium bearing steel (SUJ2), once the silica particles are projected at a pressure of 1470 kPa or less for 20 minutes or less, the recesses of the aforementioned structure may be formed through the protrusion removal step of bombarding the abrasive particles Moreover, in this case, surface roughness of the to-be-treated surface before the protrusion removal step may be made to have an arithmetic average roughness (Ra) of approximately 0.1 µm, The maximum roughness height (Rz) may be made between 0.4 to 2.0 µm in the protrusion removal step.

Note that if the protrusion removal step is carried out by bombarding the abrasive particles, height of the smooth surface (surface excluding recesses) after treatment may tend to be uneven, while if the protrusion removal step is carried out by barreling, height of the smooth surface after treatment may be made even. As a result, since an oil film having a uniform thickness is formed on the recess-formed surface without contact pressure increasing locally, carrying out the protrusion removal step by barreling achieves a greater torque reduction effect than by bombarding the abrasive particles. Advantageous Effect of the Invention

According to the roller bearing of the present invention, formation of specified recesses on a roller surface or a surface in contact with a roller reduces torque due to excellent capability of forming an oil film on the roller surface.
More specifically, since a tapered roller bearing for supporting a pinion shaft constituting the automobile differential has great loss due to torque, excellent fuel consumption improvement is achieved by reducing the torque through application of the present invention.

### Brief Description of the Drawings

FIG. 1 is a cross-sectional view illustrative of a tapered roller bearing according to an embodiment of the present invention;
FIG. 2 is a cross-sectional view illustrative of a vertical inner ring rotary testing machine used in this embodiment;
FIG. 3 is a diagram illustrative of a jig usable for projecting silica particles and abrasive particles only on a large-diameter end of the tapered roller bearing;
FIG. 4 is a cross-sectional view illustrative of the automobile transfer according to the conventional technology disclosed in Patent Document 9; and
FIG.. 5 shows graphs illustrative of change in hardness along the depth from the surface measured in a second embodiment, where FIG.. 5A gives results of sample No . 6, and FIG.. 5B gives results of sample No. 7.

Hereinafter, embodiments of the present invention will be described.

### First Embodiment

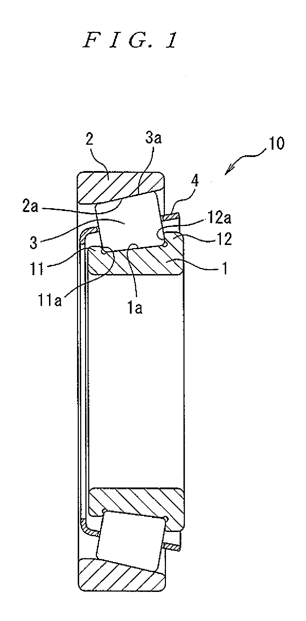

A tapered roller bearing 10 of FIG. 1 is constituted by: an inner ring 1 having an inner ring raceway surface 1a; an outer ring 2 having an outer ring raceway surface 2a; multiple tapered rollers 3 deployed in a freely rolling manner between the raceway surfaces 1a and 2a; and a cage 4.. Rib surfaces 11a and 12a making contact with ends of the tapered rollers 3 are formed on the inner ring 1 by providing ribs 11 and 12 on either axial end..
A test tapered roller bearing, bearing model number HTFR45-24 (inner ring: 45 mm, outer ring: 95.25 mm, maximum width: 35 mm, tapered roller diameter: 13.779 mm), is manufactured as the tapered roller bearing 10 having the configuration of FIG. 1.

The inner ring 1, the outer ring 2, and the tapered roller 3 are manufactured in the following manner. A material made of SUJ2 is machined into respective forms and carbonitrided for three hours in a mixed gas atmosphere (Rx gas, enriched gas, and ammonia gas) at 840 degrees Celcius.. Oil hardening and annealing are then carried out. This made respective surface layers (portion until depth of 250 µm from the surface) of the inner ring 1, the outer ring 2, and the tapered roller 3 have residual austenite within a range of 15 to 40 volume%, and hardness within a range of 62 to 67 HRC (746 to 900 Hv)

A shot blast step of projecting glass beads onto the tapered roller 3 is then carried out using the following method. A shot blast device for placing a product in a basket container and projecting glass beads from a nozzle into the container while rotating the container is used The opening of the container is opened wide and a projection nozzle tip is arranged in this entrance.

The glass beads are silica (SiO₂) particles of 99% or greater purity having an average diameter of 40 µm and a Mohs hardness of 6 or greater, manufactured into a spherical shape by fusion method. Fusion is a method of heating a heat-resistant container containing raw powder using a burner of approximately 2500 degrees Celcius so as to heat the raw powder in the container to 1100 degrees Celcius and fuse it into a spherical shape.
Conditions for the shot blast step are that container rotation speed is 5 rpm, projection is performed at a speed such that projection pressure on the tapered roller 3 is 600 kPa, and projection time is ten minutes.

A protrusion removal step for the tapered roller 3 is then carried out using the following method. Particles resulting from diamond grains with an average diameter of 10 µm adhering onto surfaces of 1 mm-diameter rubber (acrylonitrile-butadiene rubber) particles are prepared as abrasive particles. Diamond grain content of the abrasive particles is 5 mass%.

The abrasive particles are bombarded at an angle (10 to 60 degrees) against respective sides of the tapered roller 3 using an air blast device after the shot blast step. Air blast conditions are an air pressure of 0.4 MPa and a distance between the nozzle and the work area of 150 mm. Processing time is varied from 3 to 12 minutes for each sample..
For samples Nos.. 1 to 4, the shot blast step and the protrusion removal step are carried out using the aforementioned methods, surface condition of a tapered roller 3 is determined, and level of maximum roughness (Rz), size of recess opening, and intervals between recesses are then found,

A tapered roller 3 (sample No. 5) for which a barreling step is carried out but the shot blast step and the protrusion removal step are not, and a tapered roller 3 (sample No.. 6) for which any of the barreling step, the shot blast step and the protrusion removal step are not carried out are also prepared, and maximum roughness height (Rz), size of recess opening, and intervals between recesses are found. Note that the barreling step for sample No.. 5 is carried out under normal conditions.

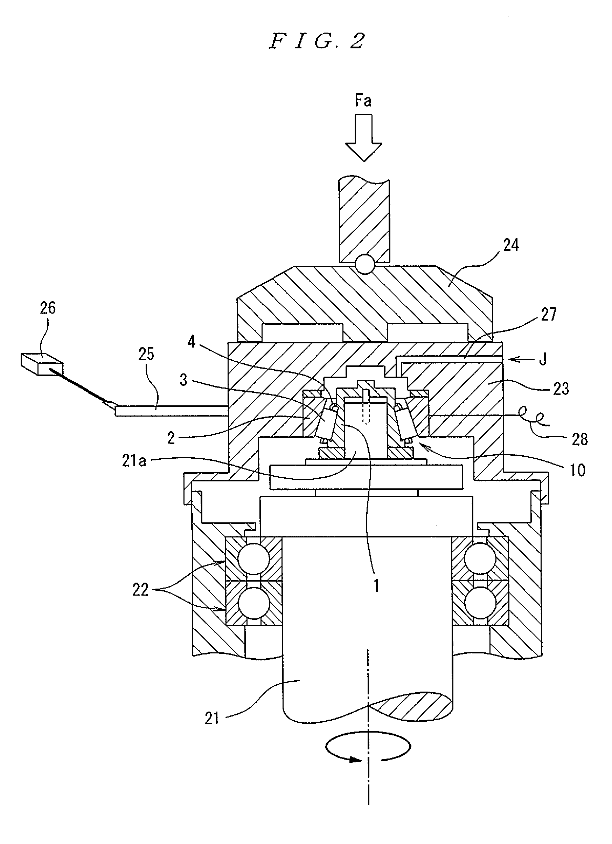

Tapered roller bearings Nos.. 1 to 6 are assembled using the inner ring 1, the outer ring 2, the respective tapered rollers 3 Nos. 1 to 6 obtained in the above manner, and the cage 4 manufactured by SPCC, and a rotation test is then conducted using an apparatus shown in FIG. 2.
The apparatus of FIG.. 2 is a vertical inner ring rotary testing machine constituted by a main shaft. 21, a supporting bearing 22, a main body 23, and a hydrostatic bearing 24.. The supporting bearing 22 is provided on an axial end 21a of the main shaft 21. The hydrostatic bearing 24 is provided on an axial end of the main body 23. The testing machine is used by fitting the inner ring 1 of a tapered roller bearing 10 or test bearing on the outside of the main shaft 21, and fitting the outer ring 2 on the inside of the main body 23.

An axial load Fa may be applied from above the hydrostatic bearing 24 A load cell 26 is connected to a side of the main body 23 via a bar 25" Dynamic friction torque applied to the main body 23 may be detected by this load cell 26" A passage 27 for supplying a lubricant J to the test bearing 10 is formed in the main body 23, The passage 27 opens at a side of the main body 23. A thermocouple 28 for measuring the temperature of the test bearing 10 is also provided.

The test bearing is attached to this apparatus, and while supplying mineral oil (VG68) at a temperature of 60 degrees Celcius ± 3 degrees Celcius, 200 ml/ min, which is less than normal supplied quantity (300 ml/ min), torque after the inner ring 1 is rotated for 24 hours under conditions of 4kN of Fa and a rotation speed of 300 min-1 is measured. A torque ratio where torque of the tapered roller bearing No. 6 is '1' is calculated based on measured torque values of the tapered roller bearings Nos. 1 to 5.
Results thereof are given in the following Table 1. Maximum recess depth in Table 1 is measured value of maximum roughness height (Rz).

**Table 1**

| No. | Roller surface | | Torque ratio of roller bearing |
|---|---|---|---|
| | Mechanical surface treatment | Maximum recess depth | |
| 1 | 3 min. abrasive particle projection after silica particle projection | 1.5 µm | 0.8 |
| 2 | 6 min, abrasive particle projection after silica particle projection | 1.0 µm | 0.5 |
| 3 | 9 min abrasive particle projection after silica particle projection | 0.5 µm | 0.6 |
| 4 | 12 min. abrasive particle projection after silica particle projection | 0.2 µm | 0.7 |
| 5 | Barreling | 0.5 µm | 0.8 |
| 6 | None | 0.08 µm | 1 |

The tapered rollers Nos. 1 to 4 have different maximum recess depths due to different projection times of the abrasive particles after the projection of the silica particles. The tapered roller bearing using the tapered roller No. 2 having a maximum recess depth of 1.0 µm has the smallest torque, which is half of that of No. 6. The recesses formed in the surfaces of the tapered rollers Nos. 1 to 4 have circular openings, where diameters of the openings are 10 to 50 µm. Intervals between the recesses are 10 to 200 µm.

While maximum recess depth of the tapered rollers No. 3 and No. 5 is the same, No. 3 to which abrasive particles are projected after the silica particles are projected has a smaller torque ratio than No.. 5 to which barreling is carried out. The recesses formed in the surface of the barreled, tapered roller have linear openings rather than circular ones.
Moreover, the tapered rollers Nos.. 1 to 4 are 0.1 to 0.2 µm in arithmetic average heights (Ra) of a roughness curve indicating surface roughness, -1..0 to -0.2 in skewness (Rsk), and 3 to 7 in kurtosis (Rku).

Note that according to this embodiment, while minute recesses whose openings are circular are provided due to projecting abrasive particles only on the surfaces of the tapered rollers 3 of the tapered roller bearings after silica particles are projected, the recesses may be provided in all or a part of the tapered rollers 3, the inner ring raceway surface 1a, the outer ring raceway surface 2a, and the rib surfaces 11a and 12a.. Moreover, the present invention achieves the same results even with roller bearings other than the tapered roller bearings.

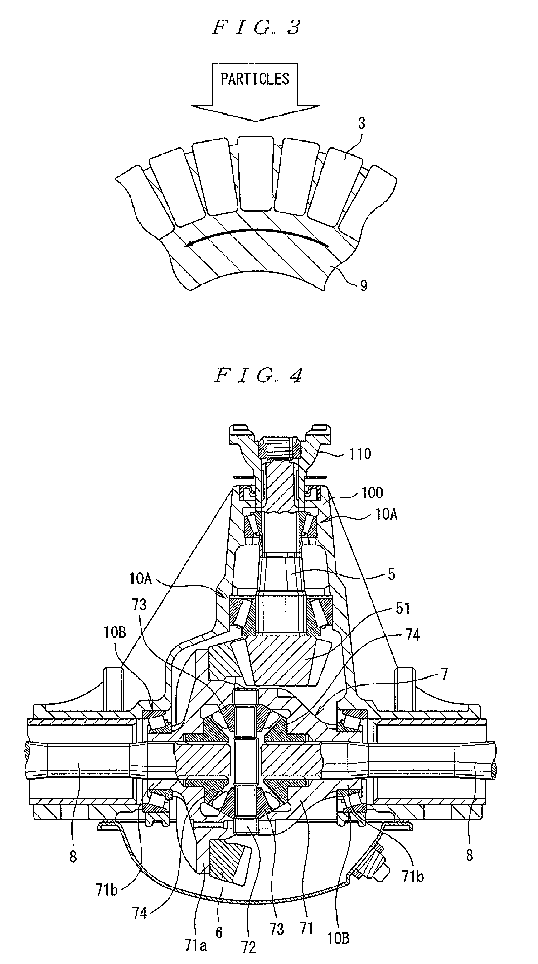

Furthermore, in the case of projecting silica particles and abrasive particles only on the large diameter end of the tapered roller 3, the tapered roller 3 may be attached next to a disc-like jig 9 so as to project the particles while rotating the jig 9, as shown in FIG. 3. Particularly, since a large sliding friction generates on the large diameter end of the tapered roller when the tapered roller bearing (for example, the tapered roller bearing 10A of FIG. 4) is supported by a differential pinion shaft, torque may be sufficiently reduced even when the aforementioned recesses are provided only on that end.

### Second Embodiment

Sample No , 7, which is the tapered roller 3 of the tapered roller bearing 10 of FIG. 1, where processing up through the shot blast step is carried out using the same method as with samples Nos. 1 to 4, and the protrusion removal step is not carried out, is prepared.
Sample No.. 8, which is the t.apered roller 3 of the tapered roller bearing 10 of FIG.. 1, where processing up through the shot blast step is carried out using the same method as with samples Nos. 1 to 4 except that alumina particles are used instead of the silica particles, and the protrusion removal step is not carried out, is prepared Alumina (Al₂O₃) particles of 99% or greater purity having an average diameter of 40 µm and a Mohs hardness of 6 or greater, manufactured into a spherical shape through fusion are used.

Surface conditions of the tapered rollers 3 of samples No. 7 and No. 8 are measured, and arithmetic average height (Ra) of a roughness curve indicating surface roughness, skewness (Rsk), kurtosis (Rku), maximum roughness height (Rz), size of recess openings, and recess intervals are found.. Change in hardness along the depth from the surface of the ends of the tapered rollers 3 of samples No. 6 (sample for which the shot blast step is not carried out) and No. 7 is also found..

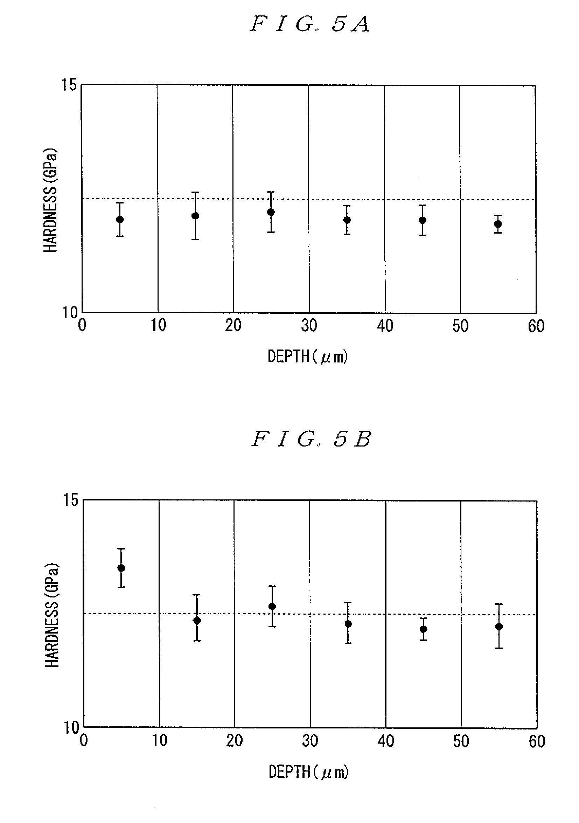

Tapered roller bearings Nos" 7 and 8 are assembled using the inner ring 1, the outer ring 2, the respective tapered rollers 3 of samples Nos. 7 and 8, and the cage 4 manufactured by SPCC, and the same rotation test as in the first embodiment is then conducted using the apparatus shown in FIG. 2 so as to measure torque. A torque ratio where torque of the tapered roller bearing No. 6 is '1' is calculated based on measured torque values of the tapered roller bearings of samples Nos. 7 and 8.
Results thereof are given in the following Table 2 and FIG. 5.. FIG.. 5 shows graphs illustrative of change in hardness along the depth from the surface, where FIG. 5A gives results of sample No. 6, and FIG. 5B gives results of sample No. 7.

**Table 2**

| No. | Roller surface condition | | | | Torque ratio of roller bearing |
|---|---|---|---|---|---|
| | Ra | Rsk | Rku | Rz | |
| 7 | 0.1 | -0.2 | 3 | 1.8 | 0.75 |
| 8 | 0.2 | -1 | 7 | 2.1 | 0.50 |

The recesses formed in the surfaces of the tapered rollers Nos" 7 and 8 have circular openings, where diameters of the openings are 10 to 50 µm. Intervals between the recesses are 10 to 200 µm.
It is understood from these results that even when the protrusion removal step is not carried out, surfaces of the tapered rollers may have multiple recesses, which have circular openings with diameters of 10 µm to 50 µm inclusive, at intervals of 10 µm to 200 µm inclusive, and a state fulfilling arithmetic average height (Ra) of 0.1 to 0.2 µm, skewness (Rsk) of -1.0 to -0.2, and kurtosis (Rku) of 3 to 7, thereby sufficiently reducing the torque.

Moreover, as is understood through comparison of FIGS. 5A and 5B, a surface layer at a depth of 10 µm or less from the surface may be made harder than a core at a depth of more than 10 µm from the surface through shot blasting using spherical particles having a Mohs hardness of 6 or greater. Reference Signs List

1: inner ring
1a: inner ring raceway surface
11, 12: rib
11a, 12a: rib surface
2: outer ring
2a: outer ring raceway surface
3: tapered roller
4: cage
5: bevel pinion shaft
6: ring gear
7: differential
71: differential casing
71a: flange
71b: cylinder
72: pinion shaft
73: pinion gear (differential gear)
74: side gear (output gear)
8: axel shaft
9: jig
10: tapered roller bearing
10A: tapered roller bearing
10B: tapered roller bearing
100: casing (gear box)
110: screw thread-attached member
Description of Embodiments

## Claims

1. A roller bearing, comprising:
an inner ring having an inner ring raceway surface, an outer ring having an outer ring raceway surface, and a roller deployed in a freely rolling manner between the raceway surfaces, wherein
a number of recesses having circular openings with diameters of 10 µm to 50 µm inclusive are formed at intervals of 10 µm to 200 µm inclusive on at least a target surface which is at least any one of the inner ring raceway surface, the outer ring raceway surface, a roller surface of the roller, an end of the roller, and a rib surface in contact with the end of the roller.

2. The roller bearing of Claim 1, wherein the target surface has an arithmetic average height (Ra) of a roughness curve indicating surface roughness of 0.1 to 0.2 µm, skewness (Rsk) of -1,0 to -0.2, and kurtosis (Rku) of 3 to 7.

3. The roller bear ing of either Claim 1 or Claim 2, wherein a surface layer at a depth of 10 µm or less from the surface of the target surface is harder than a core at a depth of more than 10 µm from the surface.

4. The roller bearing of either Claim 1 or Claim 2, wherein the roller is a tapered roller used for application of supporting a rotating shaft of an automobile differential, transmission, or transfer.

5. A roller bearing manufacturing method, comprising:
a shot blast step of projecting spherical particles having a Mohs hardness of 6 or greater and diameters of 10 µm to 100 µm inclusive so as to form recesses and protrusions, as a surface treatment step for a to-be-treated surface comprising at least any one of an inner ring raceway surface, an outer ring raceway surface, a roller surface of the roller, an end of a roller, and a rib surface in contact with the end of the roller of a roller bearing that comprises an inner ring having the inner ring raceway surface, an outer ring having the outer ring raceway surface, and the roller deployed in a freely rolling manner between the raceway surfaces.,

6. The roller bearing manufacturing method of Claim 5, wherein the shot blast step is carried out using spherical silica microparticles of 99% or greater purity as the spherical particles.

7. The roller bearing manufacturing method of Claim 5, wherein a protrusion removal step for removing protrusions generated in the shot blast step is carried out as the surface treatment step after the shot blast step.

8. The roller bearing manufacturing method of Claim 7, wherein the protrusion removal step is carried out by bombarding abrasive particles formed of elastic bodies and grains on a to-be-treated surface after the shot blast step..

9. The roller bearing manufacturing method of any one of Claim 5 to Claim 8, wherein the roller is a tapered roller used for application of supporting a rotating shaft, of an automobile differential, transmission, or transfer.
